# EUROPÄISCHE PATENTSCHRIFT

(11) **EP 0 641 516 B1**
(45) Veröffentlichungstag und Bekanntmachung des Hinweises auf die Patenterteilung: **07.03.2001**
(21) Anmeldenummer: 94113659.0
(22) Anmeldetag: 01.09.1994
(51) Int. Cl.: A01N 47/22, A01N 43/64, A01N 43/12, A01N 25/04

(54) **Wässrige herbizide Suspensionskonzentrate**
Aqueous herbicidal suspension concentrate
Suspensions aqueuses concentrées herbicides

(30) Priorität: 04.09.1993 DE 4329974
(43) Veröffentlichungstag der Anmeldung: 08.03.1995
(73) Patentinhaber: Stefes Agro GmbH, D-50170 Kerpen (DE)
(72) Erfinder: Müller, Jacki, D-50374 Erftstadt (DE)
(74) Vertreter: Flaccus, Rolf-Dieter, Dr.

(56) Entgegenhaltungen:
- EP-A- 0 327 176
- EP-A- 0 388 239
- EP-A- 0 465 899
- EP-A- 0 620 971
- WO-A-92/09195
- DD-A- 263 221
- DE-A- 2 651 046

## Beschreibung

Die Erfindung betrifft herbizide Suspensionskonzentrate, Verfahren zu ihrer Herstellung und Verwendung.

Die selektiven Wirkstoffe Ethofumesat {(+/-) - (2-Ethoxy-2,3-dihydro-3,3-di-methylbenzofuran-5-yl)-methansulfonat}, Metamitron {4-Amino-4,5-dihydro-3-methyl-6-phenyl-1,2,4-triazin-5(4H)-on}, Phenmedipham {Methyl-3-(3-methyl-carbaniloyl -oxy)-carbanilat} und Desmedipham {[3-(Ethoxycarbonylamino)-phenyl]-phenylcarbamat} gehören seit vielen Jahren zur Standardbehandlung gegen mono- und dikotyle Unkräuter im Rübenanbau. Es hat sich in den letzten Jahren die Applikation im sogenannten Splitting-Verfahren weitestgehend durchgesetzt. Hierbei werden entsprechend der Verunkrautung zwei bis vier der Wirkstoffe erstmals in einem möglichst frühen Entwicklungsstadium appliziert, um bei einer minimierten Aufwandmenge eine optimale Wirkung zu erzielen. Die erste Applikation erfolgt meist im Keimblattstadium der Rübe, also zu einem Zeitpunkt, bei dem die Kultur noch sehr empfindlich reagiert.

Die weiteren zwei bis drei Anwendungen erfolgen in der Regel in etwa vier-zehntägigem Abstand mit einer dem Unkrautdruck angepaßten Wirkstoffmischung und -menge.

Der Zusatz des Wirkstoffs Desmedipham hat eine praxisrelevante Wirkungs-steigerung gegenüber den Amaranth-Spezien Amaranthus rethroflex und Amaranthus blitoides zur Folge.

Die Amaranthus-Arten sind speziell in Mitteleuropa zu einem Problemunkraut in Beta-Rüben geworden.

Obwohl Phenmedipham und Desmedipham sich chemisch sehr ähnlich sind (beide sind Biscarbamate), ist die spezifische Wirkung auf Amaranth-Arten signifikant besser (10 bis 20%).

Die bisher zugelassenen Präparate enthalten die Wirkstoffe Ethofumesat und Phenmedipham (zum Teil auch Desmedipham) einzeln oder kombiniert, oft auf Basis eines oder mehrerer organischer Lösungsmittel wie zum Beispiel Isophoron {3,5,5-Trimethyl-2-cyclohexen-on}, Xylol, Cyclohexanon oder Acetophenon, also in Form von Emulsionskonzentraten.

DE 2651046 A1 offenbart wäßrige suspensionsKonzentrate auf der Basis von Ethofumesat, wobei als mögliches zusätzliches Herbizid u.a Phenmedipham genannt wird. Ein konkretes Beispiel einer solchen Formulierung wird nicht gegeben.

Bisher bekannte Präparate weisen einen Gehalt an organischen Lösungsmitteln von etwa 400 bis 700 g/l auf, was bei den üblichen Aufwandmengen von etwa 4 bis 6 l/10⁴m² zu einer Ausbringung von 1, 6 bis 4,2 kg Lösungsmittel pro 10⁴m² führt. Bedingt durch die Tatsache, daß die erste Applikation schon im Keimblatt der Rübe erfolgt, ist es seit langem bekannt, daß es bei dieser frühen Applikation mit den auf den Lösungsmitteln beruhenden Emulsionskonzentraten, insbesondere mit denjenigen, welche den Wirkstoff Ethofumesat enthalten, zu Phytotoxizitäten kommen kann. Diese Phytotoxizitäten werden zum Teil dadurch verursacht, daß die Lösungsmittel die in diesem Stadium schwach ausgebildete, die Rübenpflanze schützende Wachsschicht lösen.

Darüber hinaus ist es seit langem bekannt, daß insbesondere das leicht hydrolysierbare Phenmedipham in einer solchen Lösung durch Verwendung eines sauren Stabilisators, z. B. Zitronensäure, Salicylsäure, Dodecylbenzolsulfonsäure oder ähnliche starke Säuren oder Salze, zu stabilisieren ist.

Außerdem neigen die herkömmlichen Herbizidpräparate, insbesondere solche, welche Ethofumesat und Phenmedipham enthalten, zum Auskristallisieren des Wirkstoffes, so daß beim Auftragen dieser Wirkstoffmischungen die Sprühdüsen des Auftragungsgerätes (Feldspritze) verstopfen und eine unregelmäßige Verteilung der Herbizide auf den Kulturpflanzen die Folge ist, was zu Ertragseinbußen führen kann. Der Grund hierfür ist das Lösen des organischen Lösungsmittels - als Trägerstoff der Wirkstoffe - aus der eigentlichen Emulsion heraus ins Spritzwasser.

Relativ neu sind Phenmedipham enthaltende Suspensionskonzentrate auf Ölbasis Siehe dazu z.B. DD 263 221 A5 und WO 92/09195 A₁ Zwar wird häufig emulgierbares Öl der Spritzbrühe zugesetzt, um die Wirksamkeit durch einen sogenannten Brennglaseffekt zu verbessern, dieses kann aber auch witterungsbedingt (starke Sonneneinstrahlung) zu Schäden an der Pflanzenkultur führen. Deshalb ist die Anwendung von Präparaten mit einem bestimmten Gehalt an Ölen, insbesondere bei Tankmischungen und bei frühester Applikation, nicht immer ratsam.

Der Wirkstoff Metamitron ist seit langem als WDG (wasserdispergierbares Granulat) auf dem Markt. Er zeichnet sich ebenso wie der Wirkstoff Phenmedipham durch eine generelle hohe Kulturverträglichkeit aus. Er wurde bisher nur in nichtwäßrigen Formulierungstypen vermarktet. Der Grund hierfür ist die relativ hohe Löslichkeit des Wirkstoffes in Wasser mit etwas 1,9 g/l, verbunden mit einer starken UV-Absorption bei 330 nm, was letztlich zu einer raschen photolytischen Zersetzung des Wirkstoffes in der wäßrigen Präparation führt (vgl. dazu DE-PS 43 13 093.3).

Aufgabe der Erfindung ist es, eine Herbizidformulierung anzugeben, welche es dem Anwender gestattet, nicht nur verschiedene Herbizide - unterschiedlichster Zusammensetzung und Struktur - als eine Mischung in einem Sprühvorgang zu applizieren, sondern auch die Kriterien der einfachen Handhabung, z. B. leichte Dosier- und unproblematische Mischbarkeit, sowie die Zuverlässigkeit beim Sprühvorgang zu erfüllen, ohne daß beispielsweise die Sprühdüsen des Auftragungsgerätes (Feldspritze) aufgrund der Herbizidauskristallisierung verstopfen oder die Herbizidmischungen aufgrund längerer Lagerung durch Hydrolyse der Wirkstoffe instabil werden. Auch sollte es möglich sein, daß beim Umfüllen der Herbizidformulierung von Transportgefäßen in die vorgesehene Sprühvorrichtung keine den Anwender belastenden Dämpfe und Stäube auftreten. Darüber hinaus soll die Herbizidformulierung bei Transport oder im Falle einer längeren Lagerung kein Gefahrenpotential durch Brennbarkeit darstellen.

Auch ist eine Herbizidformulierung gefordert, die eine hohe Verträglichkeit für Pflanzen, z. B. ohne Auflösen der Wachsschutzschicht, garantiert. Darüber hinaus ist es wünschenswert, daß die Herbizidformulierung preiswert in der Verwendung des Lösungsmittels sein sollte, um eine ubiquitäre Verwendung in der Landwirtschaft zu gewährleisten.

Die Aufgabe wird gelöst durch die herbiziden Suspensionskonzentrate gemäß Hauptanspruch und durch die Verfahren und die Verwendungen der herbiziden Suspensionskonzentrate gemäß der Nebenansprüche. Die Unteransprüche betreffen bevorzugte Ausführungsformen dieser Erfindungsgegenstände.

Gegenstand der Erfindung sind somit herbizide Suspensionskonzentrate auf rein wäßriger Basis, welche zumindest einen Vertreter der Phenmedipham und Desmedipham umfassenden Gruppe der Biscarbamatherbizide enthalten, sowie ein Dispergierungsmittel, und welche dadurch gekennzeichnet sind, daß sie zumindest einen weiteren Vertreter aus der Gruppe der Benzofuranherbizide enthalten, gegebenenfalls zusammen mit einem Triazinonherbizid. Diese herbiziden Suspensionskonzentrate sind ferner dadurch gekennzeichnet, daß ihr pH-Wert zwischen 1,5 und 6,0 liegt, und daß sie einen Gehalt an Dispergierungsmittel von 5 bis 100 g/l aufweisen.

Es hat sich nun bei verschiedenen Versuchen zur Formulierung eines fertigen Mischpräparates überraschenderweise und für den Fachmann nicht vorhersehbar gezeigt, daß es sehr wohl möglich ist, Mischungen von Phenmedipham und/oder Desmedipham mit einem Benzofuranherbizid (wie z. B. Ethofumesat) und gegebenenfalls mit einem Triazinonherbizid (wie z. B. Metamitron) als Suspensionskonzentrate auf Wasserbasis herzustellen. Dies ist um so erstaunlicher, da Carbamate und insbesondere Bis-carbamate als sehr hydrolyseempfindlich bekannt sind (vgl. Römpp Chemie-Lexikon, 9. Aufl., 1989; S. 574), und es damit nicht zu erwarten ist, daß sowohl Phenmedipham als auch Desmedipham im reinen wäßrigen Milieu formulierbar seien.

Ein weiterer Gegenstand der Erfindung ist ein Verfahren zur Herstellung herbizider Suspensionskonzentrate, welches dadurch gekennzeichnet ist, daß die Feinstvermahlung der Dispersion in einer Kolloidmühle durchgeführt wird.

Ein zusätzlicher Gegenstand der Erfindung ist die Verwendung der herbiziden Suspensionskonzentrate, die dadurch gekennzeichnet ist, daß die herbiziden Suspensionskonzentrate im Splitting-Verfahren aufgetragen werden.

In einer Ausführungsform der Erfindung zeigt sich, daß ein guter Wirkungsgrad erzielt wird, wenn die Biscarbamat-Herbizide (Phenmedipham, Desmedipham) und Benzofuranherbizide in einer Konzentration von 100 bis 350 g/l in den herbiziden Suspensionskonzentraten vorliegen, wobei jedoch ein Konzentration von 150 bis 250 g/l vorteilhafter ist.

In einer besonderen Ausführungsform der Erfindung sind die Effekte der herbiziden Suspensionskonzentrate noch höher, falls die Triazinonherbizide in einer Konzentration von 150 bis 600 g/l, vorzugsweise von 200 bis 400 g/l, in den herbiziden Suspensionskonzentraten vorliegen.

Nach einer Ausführungsform der Erfindung können die Biscarbamat-Herbizide (Phenmedipham, Desmedipham), Benzofuranherbizide und Triazinonherbizide in einem Gewichtsverhältnis von 1:1:2 bis 1:1:4 vermischt werden, wobei das Gewichtsverhältnis von 1:1:3 besonders geeignet ist.

Ein weiterer Vorteil ist die pH-Wert-Einstellung durch Zugabe mindestens eines sauren Bestandteils, der organische Säuren, wasserlösliche organische Säuren (z. B. Citronensäure), saure Salze (z. B. Ammoniumchlorid oder -sulfat), und/oder sauer reagierende oberflächenaktive Substanzen (z. B. Dodecylsulfonsäurederivate), sein kann. Besonders vorteilhaft ist eine Konzentration der sauren Bestandteile von 0,1 bis 50 g/l, noch vorteilhafter, wenn der Konzentrationsbereich bei 1 bis 10 g/l liegt.

Der pH-Wert der erfindungsgemäßen herbiziden Suspensionskonzentrate liegt im Bereich von 1,5 bis 6,0, vorzugsweise im pH-Bereich von 2,5 bis 3,5.

Beachtenswert ist außerdem, daß die herbiziden Suspensionskonzentrate Zusatzstoffe und/oder weitere Wirkstoffe enthalten können. Als Zusatzstoffe eignen sich insbesondere Frostschutzmittel, Dispergiermittel und/oder Verdicker. Diese können in Kombination oder allein in den herbiziden Suspensionskonzentraten eingesetzt werden. In einer Ausführungsform wird als Frostschutzmittel ein Glykol verwendet, um die Lagerstabilität zu garantieren. Dabei zeigen sich Propylen-, Diethylen- oder Monoethylenglykol als sehr wirksam.

Die erfindungsgemäßen wäßrigen herbiziden Suspensionskonzentrate enthalten ein Dispergierungsmittel in einer Konzentration von 5 bis 100 g/l. Besonders vorteilhaft ist ein Gehalt an Dispergierungsmittel von 30 bis 60 g/l. Als besonders effektvoll erweist sich die Verwendung von ethoxiliertem Tristyrolphosphat und/oder Alpha-(p-nonylphenyl)-omega-hydroxy-poly(oxypropylen)-blockpolymer mit 10 bis 80 mol Poly-oxyethylen und 10 bis 60 mol Poly-oxypropylen mit einer Molmasse von 1200 bis 7100 als Dispergiermittel.

Es hat sich dabei gezeigt, daß eine Einstellung der Viskosität der erfindungsgemäßen herbiziden Suspensionskonzentrate in einem Bereich 150 bis 700 mPa·s, bevorzugterweise von 300 bis 500 mPa·s, mit Hilfe von Verdickern zu besonders guten Lagerstabilitäten führt.

In einer besonderen Ausführungsform der Erfindung kann Formaldehyd als Bestandteil der herbiziden Suspensionskonzentrate zugesetzt werden, um die Verdicker vor bakterieller Zersetzung zu schützen, wobei besonders gute Ergebnisse mit einer Formaldehydkonzentration von 0,1 bis 10 g/l in den herbiziden Suspensionskonzentraten erzielt werden.

Besonderes Augenmerk ist ebenfalls auf die Korngröße der Feststoffpartikel der herbiziden Suspensionskonzentrate zu werfen, wobei eine überragende Wirkung bei einer mittleren Korngröße von weniger als 3 µm erreicht wird. Auch ist die Ausführungsform, bei welcher die erfindungsgemäßen herbiziden Suspensionskonzentrate einen Gesamtgehalt an Wirkstoffen von bis zu 400 bis 750 g/l enthalten, besonders vorteilhaft.

Als Benzofuranherbizid eignet sich besonders Ethofumesat {(+/-) - (2-Ethoxy-2,3-dihydro-3,3-dimethylbenzofuran-5-yl)-methansulfonat}, als Triazinonherbizid eignet sich besonders Metamitron {4-Amino-4,5-dihydro-3-methyl-6-phenyl-1,2,4-triazin-5(4H)-on}. Die genannten Herbizide erzielen in den erfindungsge-mäßen Kombinationen mit Desmedipham und/oder Phenmedipham ausgezeichnete herbizidale Wirkungen.

Weiterhin eignen sich erfindungsgemäße herbizide Suspensionskonzentrate der o. g. Zusammensetzungen, wenn die Feinstvermahlung der Dispersion in einer Kolloidmühle durchgeführt wird, wobei vorzugsweise die mittlere Korngröße der Feststoffpartikel weniger als 3 µm betragen kann.

In einer besonderen Ausführungsform der Erfindung erweist sich die Applikation der herbiziden Suspensionskonzentrate im Splitting-Verfahren auf Pflanzen als außergewöhnlich wirksam.

Die erfindungsgemäßen wäßrigen Suspensionskonzentrate, welche Desmedipham und/oder Phenmedipham zusammen mit Ethofumesat, gegebenenfalls auch in Kombination Metamitron enthalten, sind in ihrer breiten, selektiven Wirkung und in ihrer Verträglichkeit den bekannten Tankmischungen überlegen. In einer solchen Mischung ergänzen sich die Wirkungseigenschaften der einzelnen Bestandteile in ausgezeichneter Weise. So haben Desmedipham und Phenmedipham als eine rein blattaktive Substanz eine raschere Anfangswir-kung, wohingegen Ethofumesat und Metamitron sowohl über das Blatt als auch über die Wurzeln wirken und so einen Langzeiteffekt hervorrufen.

Eine solche Präparation bekämpft breitenwirksam mono- und dikotyle Unkräuter, einschließlich der Problemunkräuter im Rübenanbau Mercurialis annua (Bingelkraut), Matricaria (Kamille-Arten), Galinsoga parviflora (Franzosenkraut), Galium aparine (Klettenlabkraut), Raphanus raphanistrum (Hederich), Atriplex (Melde-Arten), Polygonum (Knöterich-Arten) sowie Poa annua (einjähriges Rispengras) und Amaranthus (Fuchsschwanzarten).

Daraus ergeben sich für die Unkrautbekämpfung im Rübenanbau Vorteile gegenüber dem Stand der Technik.

So hergestellte Formulierungen mit den Wirkstoffen Phenmedipham und/oder Desmedipham, Ethofumesat und gegebenenfalls Metamitron zeigen eine ausgezeichnete Lagerstabilität, kombiniert mit einer sehr guten Stabilität der Spritzbrühe, ohne daß die Wirkstoffe hydrolysiert werden oder auskristallisieren.

Bisher gibt es keine kommerziell hergestellten und gehandelten Herbizid-Sus-pensionskonzentrate auf Wasserbasis, welche außer Phenmedipham und/oder Desmedipham ein Benzofuranherbizid und gegebenenfalls zusätzlich ein Triazinon-Herbizid enthalten. Die erfindungsgemäßen wäßrigen herbiziden Suspensionskonzentrate weisen gegenüber den herkömmlichen Mitteln auf Lösungsmittel- oder Ölbasis eine wesentlich verbesserte Kulturverträglichkeit auf.

Weiterhin wird der Eintrag von biologisch nicht zielgerichtet wirksamen, aber die Umweltkompartimente Boden, Wasser und Luft belastenden organischen Lösungsmitteln eliminiert.

Darüber hinaus sind sie wirtschaftlicher in der Herstellung, da die teuren Lösungsmittel durch Wasser als Trägerstoff substituiert werden. Ebenso verringert sich die Menge an den zur Dispergierung nötigen oberflächenaktiven Substanzen um ungefähr die Hälfte.

Gleichfalls wird die Verpackung, der Transport und die Lagerhaltung ökonomischer, da die Suspensionskonzentrate höher konzentriert werden können - bis etwas 700 bis 750 g Wirkstoff pro Liter, wohingegen bei herkömmlichen Emulsionskonzentraten die Konzentrationsgrenze durch die maximale Löslichkeit des/der Wirkstoffe(s) im entsprechenden Lösungsmittel vorgegeben wird. Außerdem sind die erfindungsgemäßen wäßrigen herbiziden Suspensionskonzentrate auch sicherer, da sei aufgrund der Verwendung von Wasser nicht brennbar sind.

Ebenso ergeben sich für den Anwender besonders aus der Mischung, welche Metamitron, Desmedipham, Phenmedipham und Ethofumesat enthält, Vorteile in Hinsicht auf eine staubfreie Dosierbarkeit, da die herkömmlichen Metamitronformulierungen als Pulver oder als Granulat konfektioniert sind. Im übrigen entfällt auch bei den erfindungsgemäßen wäßrigen herbiziden Suspensionskonzentraten das umständliche Vermischen der einzelnen Präparate.

Außerdem verringert sich die Phytotoxizität im Gegensatz zu herkömmlichen Herbizidformulierungen, weil die Wachsschutzschicht nunmehr durch die erfindungsgemäßen wäßrigen Suspensionskonzentrate nicht mehr aufgelöst wird.

Einer der wesentlichsten Vorteile ist jedoch auch die Tatsache, daß solchermaßen hergestellte Präparate keine Probleme durch die Auskristallisierung in der Spritzbrühe nicht nur während der Lagerung und des Transports, sondern auch während des Sprühvorgangs haben. Diese Problem tritt bei den erfindungsgemäßen herbiziden Suspensionskonzentraten prinzipiell nicht mehr auf, so daß sie sich als neue flüssige Präparate zur Unkrautbekämpfung in Rüben-kulturen sehr eignen.

Die erfindungsgemäßen wäßrigen herbiziden Suspensionskonzentrate, welche die Wirkstoffe Phenmedipham und/oder Desmedipham, sowie Ethofumesat und gegebenenfalls Metamitron enthalten, zeichnen sich folglich u. a. dadurch aus, daß sie
- es dem Anwender ersparen, mehrere Präparate unterschiedlicher Konsistenz abzufüllen und zu mischen
- sich exakt abmessen lassen, da sie volumendosierbar sind
- keine die Umwelt belastenden organischen Lösungsmittel enthalten
- leicht und preiswert dosierbar sind
- nicht phytotoxisch wirken
- keine den Anwender belastenden Dämpfe oder Stäube bilden
- optimal kulturverträglich durch die Verwendung von Wasser als Trägerstoff sind
- bei der Lagerung und dem Transport wegen ihrer Nichtbrennbarkeit kein Gefahrenpotential darstellen
- bei der Applikation nicht zu Problemen durch Düsenverstopfung infolge von Auskristallisierung der Wirkstoffe führen, was ansonsten eine Minderwirkung zur Folge hätte.
- preiswerter in der Herstellung durch Substitution der Lösungsmittel durch Wasser sind
- ökonomischere Verpackungen durch höhere Konzentrationen der Wirkstoffe in der Präparation ermöglichen
- nahezu alle Problemunkräuter in Betarüben erfasst werden.

Die oben erwähnten und nachfolgenden Ausführungsformen und Vorteile der Erfindung werden in der folgenden Beschreibung der Erfindung anhand der Beispiele näher erläutert.

### Beispiele

Besonders bevorzugte Ausführungsformen der erfindungsgemäßen herbiziden Suspensionskonzentrate haben folgende Zusammensetzungen:

| Beispiel A | |
|---|---|
| | Konzentration [g/l] |
| Metamitron | 250 bis 300 |
| Phenmedipham | 50 bis 150 |
| Ethofumesat | 50 bis 150 |
| Dispergiermittel | 25 bis 60 |
| Citronensäure | 3 bis 8 |
| Entschäumer | 5 bis 10 |
| Diethylenglykol | 40 bis 80 |
| Wasser | zu 1 Liter |

| Beispiel B | |
|---|---|
| | Konzentration [g/l] |
| Metamitron | ---------- |
| Phenmedipham | 150 bis 250 |
| Ethofumesat | 150 bis 250 |
| Dispergiermittel | 20 bis 50 |
| Citronensäure | 3 bis 6 |
| Entschäumer | 5 bis 10 |
| Diethylenglykol | 60 bis 90 |
| Formaldehyd | 0,5 bis 1 |
| Wasser | zu 1 Liter |

| Beispiel C | |
|---|---|
| | Konzentration [g/l] |
| Metamitron | 250 bis 300 |
| Phenmedipham | 50 bis 150 |
| Desmedipham | 5 bis 50 |
| Ethofumesat | 50 bis 150 |
| Dispergiermittel | 25 bis 60 |
| Zitronensäure | 3 bis 8 |
| Entschäumer | 5 bis 10 |
| Diethylenglykol | 40 bis 80 |
| Formalin | 0,5 bis 1 |
| Wasser | zu 1 Liter |

| Beispiel D | |
|---|---|
| | Konzentration [g/l] |
| Metamitron | ----------- |
| Phenmedipham | 150 bis 250 |
| Desmedipham | 10 bis 60 |
| Ethofumesat | 150 bis 250 |
| Dispergiermittel | 20 bis 50 |
| Zitronensäure | 3 bis 6 |
| Entschäumer | 5 bis 10 |
| Diethylenglykol | 60 bis 90 |
| Formalin | 0,5 bis 1 |
| Wasser | zu 1 Liter |

## Patentansprüche

1. Zumindest einen Vertreter aus der Phenmedipham und Desmedipham umfassenden Gruppe der Biscarbamatherbizide enthaltendes herbizides Suspensionskonzentrat auf rein wäßriger Basis mit einem Gehalt an Dispergierungsmittel, gekennzeichnet durch zumindest einen weiteren Vertreter aus der Gruppe der Benzofuranherbizide, gegebenenfalls zusammen mit einem Triazinonherbizid, mit einem pH-Wert zwischen 1,5 und 6,0 und einem Gehalt an Dispergierungsmittel von 5 bis 100 g/l.

2. Herbizide Suspensionskonzentrate nach Anspruch 1, dadurch gekennzeichnet, daß die Biscarbamatherbizide und Benzofuranherbizide in einer Konzentration von 100 bis 350 g/l in den herbiziden Suspensionskonzentraten vorliegen.

3. Herbizide Suspensionskonzentrate nach Anspruch 2, dadurch gekennzeichnet, daß die Biscarbamatherbizide und Benzofuranherbizide in einer Konzentration von 150 bis 250 g/l in den herbiziden Suspensionskonzentraten vorliegen.

4. Herbizide Suspensionskonzentrate nach einem der Ansprüche 1 bis 3, dadurch gekennzeichnet, daß die Triazinonherbizide in einer Konzentration von 150 bis 600 g/l in den herbiziden Suspensionskonzentraten vorliegen.

5. Herbizide Suspensionskonzentrate nach einem der Ansprüche 1 bis 4, dadurch gekennzeichnet, daß die Triazinonherbizide in einer Konzentration von 200 bis 400 g/l in den herbiziden Suspensionskonzentraten vorliegen.

6. Herbizide Suspensionskonzentrate nach einem der Ansprüche 1 bis 5, dadurch gekennzeichnet, daß die herbiziden Suspensionskonzentrate Biscarbamatherbizide, Benzofuranherbizide und Triazinonherbizide in einem Gewichtsverhältnis von 1:1:2 bis 1:1:4 enthalten.

7. Herbizide Suspensionskonzentrate nach einem der Ansprüche 1 bis 6, dadurch gekennzeichnet, daß die herbiziden Suspensionskonzentrate Biscarbamatherbizide, Benzofuranherbizide und Triazinonherbizide in einem Gewichtsverhältnis von 1:1:3 enthalten.

8. Herbizide Suspensionskonzentrate nach einem der Ansprüche 1 bis 7, dadurch gekennzeichnet, daß die Herbizidkonzentrate einen pH-Wert von 2,5 bis 3,5 aufweisen.

9. Herbizide Suspensionskonzentrate nach einem der Ansprüche 1 bis 8, dadurch gekennzeichnet, daß die Herbizidkonzentrate zum Einstellen des pH-Wertes mindestens einen sauren Bestandteil enthalten.

10. Herbizide Suspensionskonzentrate nach Anspruch 9, dadurch gekennzeichnet, daß der saure Bestandteil mindestens ein Vertreter aus der organische Säuren, wasserlösliche organische Säuren, saure Salze und sauer reagierende oberflächenaktive Substanzen umfassenden Gruppe ist.

11. Herbizide Suspensionskonzentrate nach Anspruch 9 oder 10, dadurch gekennzeichnet, daß der saure Bestandteil in einer Konzentration von 0,1 bis 50 g/l vorliegt.

12. Herbizide Suspensionskonzentrate nach Anspruch 11, dadurch gekennzeichnet, daß der saure Bestandteil in einer Konzentration von 1 bis 10 g/l vorliegt.

13. Herbizide Suspensionskonzentrate nach einem der Ansprüche 1 bis 12, dadurch gekennzeichnet, daß die herbiziden Suspensionskonzentrate Zusatzstoffe und/oder einen oder mehrere weitere Wirkstoffe enthalten.

14. Herbizide Suspensionskonzentrate nach Anspruch 13, dadurch gekennzeichnet, daß die herbiziden Suspensionskonzentrate als Zusatzstoffe neben dem Gehalt an Dispergierungsmittel einen oder mehrere Vertreter der Frostschutzmittel und Verdicker umfassenden Gruppe enthalten.

15. Herbizide Suspensionskonzentrate nach Anspruch 14, dadurch gekennzeichnet, daß das Frostschutzmittel ein Glykol ist.

16. Herbizide Suspensionskonzentrate nach Anspruch 15, dadurch gekennzeichnet, daß das Glykol Propylen-, Diethylen- oder Monoethylenglykol ist.

17. Herbizide Suspensionskonzentrate nach einem vorangehenden Ansprüche, dadurch gekennzeichnet, daß die herbiziden Suspensionskonzentrate das Dispergiermittel in einer Konzentration von 30 bis 60 g/l enthalten.

18. Herbizide Suspensionskonzentrate nach einem vorangehenden Ansprüche, dadurch gekennzeichnet, daß das Dispergiermittel ein ethoxiliertes Tristyrol-phosphat und/oder ein Alpha-(p-nonylphenyl)-omega-hydroxy-poly(oxypropylen)-blockpolymer mit 10 bis 80 mol Poly-oxyethylen und 10 bis 60 mol Poly-oxypropylen mit einer Molmasse von 1200 bis 7100 ist.

19. Herbizide Suspensionskonzentrate nach einem der Ansprüche 14 bis 18, dadurch gekennzeichnet, daß die Viskosität der herbiziden Suspensionskonzentrate mit Verdickern auf einen Bereich von 150 bis 700 mPa·s eingestellt ist.

20. Herbizide Suspensionskonzentrate nach Anspruch 19, dadurch gekennzeichnet, daß die Viskosität der herbiziden Suspensionskonzentrate mit Verdickern auf einen Bereich von 300 bis 500 mPa·s eingestellt ist.

21. Herbizide Suspensionskonzentrate nach einem der Ansprüche 13 bis 20, dadurch gekennzeichnet, daß die herbiziden Suspensionskonzentrate als Zusatzstoff Formaldehyd enthalten.

22. Herbizide Suspensionskonzentrate nach Anspruch 21, dadurch gekennzeichnet, daß die herbiziden Suspensionskonzentrate 0,1 bis 10 g/l Formaldehyd enthalten.

23. Herbizide Suspensionskonzentrate nach Anspruch 13, dadurch gekennzeichnet, daß als weiterer Wirkstoff mindestens ein Vertreter aus der Insektizide, Fungizide, Bakterizide, Safener und Pestizide umfassenden Gruppe ausgewählt ist.

24. Herbizide Suspensionskonzentrate nach einem der Ansprüche 13 bis 23, dadurch gekennzeichnet, daß der Gesamtgehalt an Wirkstoffen bis zu 400 bis 750 g/l beträgt.

25. Herbizide Suspensionskonzentrate nach einem der Ansprüche 1 bis 24, dadurch gekennzeichnet, daß die mittlere Korngröße der Feststoffpartikel weniger als 3 pm beträgt.

26. Herbizide Suspensionskonzentrate nach einem der Ansprüche 1 bis 25, dadurch gekennzeichnet, daß das Benzofuranherbizid (+/-)-(2-Ethoxy-2,3-dihydro-3,3-dimethylbenzofuran-5-yl)-methansulfonat ist.

27. Herbizide Suspensionskonzentrate nach einem der Ansprüche 1 bis 26, dadurch gekennzeichnet, daß das Triazinonherbizid 4-Amino-4,5-dihydro-3 -methyl-6-phenyl-1,2,4-triazin-5(4*H*)-on ist.

28. Verfahren zur Herstellung herbizider Suspensionskonzentrate nach einem der Ansprüche 1 bis 27, dadurch gekennzeichnet, daß die Feinstvermahlung der Dispersion in einer Kolloidmühle durchgeführt wird.

29. Verwendung der herbiziden Suspensionskonzentrate nach einem der Ansprüche 1 bis 27, dadurch gekennzeichnet, daß die herbiziden Suspensionskonzentrate im Splitting-Verfahren aufgetragen werden.

## Claims

1. Herbicidal suspension concentrate on solely aqueous basis with a content of a dispersant, said herbicidal suspension concentrate containing at least one representative of the group of biscarbamate herbicides comprising phenmedipham and desmedipham, characterised by at least one additional representative of the group of benzofurane herbicides, optionally in addition with a triazinone herbicide, having a pH-value between 1.5 and 6.0 and a content of dispersant of 5 to 100 g/l.

2. Herbicidal suspension concentrates according to claim 1, characterised in that the biscarbamate herbicides and benzofurane herbicides are present at a concentration of 100 to 350 g/l in the herbicidal suspension concentrates.

3. Herbicidal suspension concentrates according to claim 2, characterised in that the biscarbamate herbicides and benzofurane herbicides are present at a concentration of 150 to 250 g/l in the herbicidal suspension concentrates.

4. Herbicidal suspension concentrates according to one of the claims 1 to 3, characterised in that the triazinone herbicides are present at a concentration of 150 to 600 g/l in the herbicidal suspension concentrates.

5. Herbicidal suspension concentrates according to one of the claims 1 to 4, characterised in that the triazinone herbicides are present at a concentration of 200 to 400 g/l in the herbicidal suspension concentrates.

6. Herbicidal suspension concentrates according to one of the claims 1 to 5, characterised in that the herbicidal suspension concentrates contain biscarbamate herbicides, benzofurane herbicides and triazinone herbicides in a weight ratio of 1:1:2 to 1:1:4.

7. Herbicidal suspension concentrates according to one of the claims 1 to 6, characterised in that the herbicidal suspension concentrates contain biscarbamate herbicides, benzofurane herbicides and triazinone herbicides in a weight ratio of 1:1:3.

8. Herbicidal suspension concentrates according to one of the claims 1 to 7, characterised in that the herbicidal concentrates have a pH-value of 2.5 to 3.5.

9. Herbicidal suspension concentrates according to one of the claims 1 to 8, characterised in that the herbicidal concentrates contain at least one acidic constituent to adjust the pH-value.

10. Herbicidal suspension concentrates according to claim 9, characterised in that the acidic constituent is at least one representative of the organic acids, watersoluble organic acids, acidic salts and acidic-reacting surface-active agents comprising group.

11. Herbicidal suspension concentrates according to claim 9 or 10, characterised in that the acidic constituent is present at a concentration of 0.1 to 50 g/l.

12. Herbicidal suspension concentrates according to claim 11, characterised in that the acidic constituent is present at a concentration of 1 to 10 g/l.

13. Herbicidal suspension concentrates according to one of the claims 1 to 12, characterised in that the herbicidal suspension concentrates contain additives and/or one or more additional active agents.

14. Herbicidal suspension concentrates according to claim 13, characterised in that the herbicidal suspension concentrates contain as additives besides the amount of dispersants one or more representatives of the group comprising antifreezing agents and thickeners.

15. Herbicidal suspension concentrates according to claim 14, characterised in that the antifreezing agent is a glycol.

16. Herbicidal suspension concentrates according to claim 15, characterised in that the glycol is propylene glycol, diethylene glycol or monoethylene glycol.

17. Herbicidal suspension concentrates according to any one of the preceding claims, characterised in that the herbicidal suspension concentrates contain the dispersant at a concentration of 30 to 60 g/l.

18. Herbicidal suspension concentrates according to any one of the preceding claims, characterised in that the dispersant is an ethoxilated tristyrene phosphate and/or alpha-(p-nonylphenyl)-omega-hydroxy-poly(oxypropylene)-block polymer with 10 to 80 mol poly-oxyethylene and 10 to 60 mol poly-oxypropylene with a molar weight of 1200 to 7100.

19. Herbicidal suspension concentrates according to any one of the claims 14 to 18, characterised in that the viscosity of the herbicidal suspension concentrates is adjusted with thickeners to a range of 150 to 700 mPa·s.

20. Herbicidal suspension concentrates according to claim 19, characterised in that the viscosity of the herbicidal suspension concentrates is adjusted with thickeners to a range of 300 to 500 mPa·s.

21. Herbicidal suspension concentrates according to any one of the claims 13 to 20, characterised in that the herbicidal suspension concentrates contain formaldehyde as additive.

22. Herbicidal suspension concentrates according to claim 21, characterised in that the herbicidal suspension concentrates contain 0.1 to 10 g/l formaldehyde.

23. Herbicidal suspension concentrates according to claim 13, characterised in that at least one representative of the group comprising insecticides, fungicides, bactericides, safeners and pesticides is chosen as additional active agent.

24. Herbicidal suspension concentrates according to any of the claims 13 to 23, characterised in that the total content of active agents amounts to 400 to 750 g/l.

25. Herbicidal suspension concentrates according to any of the claims 1 to 24, characterised in that the mean grain size of the solid particle is less than 3 µm.

26. Herbicidal suspension concentrates according to any of the claims 1 to 25, characterised in that the benzofurane herbicide is (+/-)-(2-ethoxy-2,3-dihydro-3,3-dimethylbenzofurane-5-yl)-methanesulfonate.

27. Herbicidal suspension concentrates according to any of the claims 1 to 26, characterised in that the triazinone herbicide is 4-amino-4,5-dihydro-3-methyl-6-phenyl-1,2,4-triazin-5 (4H)-one.

28. Process for production of herbicidal suspension concentrates according to any one of the claims 1 to 27, characterised in that the very fine grinding of the dispersion is carried out in a colloid mill.

29. Use of herbicidal suspension concentrates according to any one of the claims 1 to 27, characterised in that the herbicidal suspension concentrates are applied in a splitting process.

## Revendications

1. Concentrat de suspension herbicide contenant au moins un représentant choisi parmi le groupe des herbicides du type des biscarbamates comprenant le Phenmedipham et le Desmedipham, à base purement aqueuse et possédant une teneur en agent de mise en dispersion, caractérisé par au moins un autre représentant choisi parmi le groupe des herbicides du type du benzofuranne, le cas échéant de manière conjointe avec un herbicide du type de la triazinone, possédant une valeur de pH entre 1,5 et 6,0 et une teneur en agent de mise en dispersion de 5 à 100 g/l.

2. Concentrats de suspensions herbicides selon la revendication 1, caractérisés en ce que les herbicides du type des biscarbamates et les herbicides du type du benzofuranne sont présents en une concentration de 100 à 350 g/l dans les concentrats de suspensions herbicides.

3. Concentrats de suspensions herbicides selon la revendication 2, caractérisés en ce que les herbicides du type des biscarbamates et les herbicides du type du benzofuranne sont présents en une concentration de 150 à 250 g/l dans les concentrats de suspensions herbicides.

4. Concentrats de suspensions herbicides selon l'une quelconque des revendications 1 à 3, caractérisés en ce que les herbicides du type de la triazinone sont présents en une concentration de 150 à 600 g/l dans les concentrats de suspensions herbicides.

5. Concentrats de suspensions herbicides selon l'une quelconque des revendications 1 à 4, caractérisés en ce que les herbicides du type de la triazinone sont présents en une concentration de 200 à 400 g/l dans les concentrats de suspensions herbicides.

6. Concentrats de suspensions herbicides selon l'une quelconque des revendications 1 à 5, caractérisés en ce que les concentrats de suspensions herbicides contiennent des herbicides du type des biscarbamates, des herbicides du type du benzofuranne et des herbicides du type de la triazinone dans un rapport pondéral de 1:1:2 à 1:1:4.

7. Concentrats de suspensions herbicides selon l'une quelconque des revendications 1 à 6, caractérisés en ce que les concentrats de suspensions herbicides contiennent des herbicides du type des biscarbamates, des herbicides du type du benzofuranne et des herbicides du type de la triazinone dans un rapport pondéral de 1:1:3.

8. Concentrats de suspensions herbicides selon l'une quelconque des revendications 1 à 7, caractérisés en ce que les concentrats herbicides présentent une valeur de pH de 2,5 à 3,5.

9. Concentrats de suspensions herbicides selon l'une quelconque des revendications 1 à 8, caractérisés en ce que les concentrats herbicides contiennent, à des fins de réglage de la valeur de pH, au moins un constituant acide.

10. Concentrats de suspensions herbicides selon la revendication 9, caractérisés en ce que le constituant acide représente au moins un membre choisi parmi le groupe comprenant des acides organiques, des acides organiques hydrosolubles, des sels acides et des substances tensioactives à réaction acide.

11. Concentrats de suspensions herbicides selon la revendication 9 ou 10, caractérisés en ce que le constituant acide est présent en une concentration de 0,1 à 50 g/l.

12. Concentrats de suspensions herbicides selon la revendication 11, caractérisés en ce que le constituant acide est présent en une concentration de 1 à 10 g/l.

13. Concentrats de suspensions herbicides selon l'une quelconque des revendications 1 à 12, caractérisés en ce que les concentrats de suspensions herbicides contiennent des additifs et/ou un ou plusieurs principes actifs supplémentaires.

14. Concentrats de suspensions herbicides selon la revendication 13, caractérisés en ce que les concentrats de suspensions herbicides contiennent à titre d'additifs en plus de leur teneur en agent de mise en dispersion un ou plusieurs représentants choisis parmi le groupe comprenant des agents de protection contre le gel et des épaississants.

15. Concentrats de suspensions herbicides selon la revendication 14, caractérisés en ce que l'agent de protection contre le gel est un glycol.

16. Concentrats de suspensions herbicides selon la revendication 15, caractérisés en ce que le glycol est le propylèneglycol, le diéthylèneglycol ou le monoéthylèneglycol.

17. Concentrats de suspensions herbicides selon l'une quelconque des revendications précédentes, caractérisés en ce que les concentrats de suspensions herbicides contiennent l'agent de mise en dispersion en une concentration de 30 à 60 g/l.

18. Concentrats de suspensions herbicides selon l'une quelconque des revendications précédentes, caractérisés en ce que l'agent de mise en dispersion est un phosphate de tristyrène éthoxylé et/ou une copolymère séquencé d'alpha-(p-nonylphényl)-omega-hydroxy-poly(oxypropylène) contenant de 10 à 80 moles de polyoxyéthylène et de 10 à 60 moles de polyoxypropylène avec une masse molaire de 1200 à 7100.

19. Concentrats de suspensions herbicides selon l'une quelconque des revendications 14 à 18, caractérisés en ce que la viscosité des concentrats de suspensions herbicides est réglée avec des épaississants à un domaine de 150 à 700 mPa.s.

20. Concentrats de suspensions herbicides selon la revendication 19, caractérisés en ce que la viscosité des concentrats de suspensions herbicides est réglée avec des épaississants à un domaine de 300 à 500 mPa.s.

21. Concentrats de suspensions herbicides selon l'une quelconque des revendications 13 à 20, caractérisés en ce que les concentrats de suspensions herbicides contiennent du formaldéhyde à titre d'additif.

22. Concentrats de suspensions herbicides selon la revendication 21, caractérisés en ce que les concentrats de suspensions herbicides contiennent du formaldéhyde à raison de 0,1 à 10 g/l.

23. Concentrats de suspensions herbicides selon la revendication 13, caractérisés en ce qu'on sélectionne, à titre de principe actif supplémentaire, au moins un représentant choisi parmi le groupe comprenant des insecticides, des fongicides, des bactéricides, des "safener" et des pesticides.

24. Concentrats de suspensions herbicides selon l'une quelconque des revendications 13 à 23, caractérisés en ce que la teneur totale des principes actifs s'élève de 400 à 750 g/l.

25. Concentrats de suspensions herbicides selon l'une quelconque des revendications 1 à 24, caractérisés en ce que la granulométrie moyenne des particules solides est inférieure à 3 µm.

26. Concentrats de suspensions herbicides selon l'une quelconque des revendications 1 à 25, caractérisés en ce que l'herbicide du type du benzofuranne est le (+/-)-(2-éthoxy-2,3-dihydro-3,3-diméthylbenzofuran-5-yl)-méthanesulfonate.

27. Concentrats de suspensions herbicides selon l'une quelconque des revendications 1 à 26, caractérisés en ce que l'herbicide du type de la triazinone est la 4-amino-4,5-dihydro-3-méthyl-6-phényl-1,2,4-triazin-5(4*H*)-one.

28. Procédé pour la préparation de concentrats herbicides selon l'une quelconque des revendications 1 à 27, caractérisé en ce qu'on effectue le broyage ultra-fin de la dispersion dans un broyeur des colloïdes.

29. Utilisation des concentrats de suspensions herbicides selon l'une quelconque des revendications 1 à 27, caractérisée en ce qu'on applique les concentrats de suspensions herbicides dans le procédé de fragmentation.
